# EUROPEAN PATENT APPLICATION

(11) **EP 2 323 436 A1**
(43) Date of publication of application: **18.05.2011**
(21) Application number: 10187353.7
(22) Date of filing: 13.10.2010
(51) Int. Cl.: H04W 28/08

(54) **Load re-distribution with communications network control**

(30) Priority: 16.11.2009 US 261478 P
(71) Applicant: Nokia Siemens Networks Oy, 02610 Espoo (FI)
(72) Inventor: Vainola, Kati Marita, 12240, Hikiä (FI); Lahti, Kaj Markus, 02660, Espoo (FI)

(57) **Abstract**

A method, an apparatus and a computer program product is provided for load re-distribution in a communications network. The method comprises transmitting a page to a mobile station for initiating re-distribution of said mobile station to a new core network node, receiving a response message from said mobile station in response to said transmitted page, and transmitting an identity to said mobile station, in response to receiving said response message.

## Description

### Field:

Embodiments of the invention relate to communications networks and particularly to wireless telecommunications system (UMTS, GSM) terrestrial radio access networks (UTRAN, GERAN), and the intra-domain connection of radio access network (RAN) nodes to multiple core network (CN) nodes for UTRAN/GERAN-based systems. More specifically, certain embodiments of the invention are directed to methods, an apparatus, a system, and computer programs for load re-distribution of subscribers for a CN node in a pool-area.

### Description of the Related Art:

UTRAN/GERAN refers to a communications network including base stations, or Node Bs, and RAN nodes. UTRAN/GERAN allows for connectivity between the Node Bs, for example, user equipment (UE) or mobile stations (MS), and a CN node. RAN nodes, for example, radio network controllers (RNC) or base station controllers (BSC), provide control functionalities for one or more Node Bs. The RAN node and its corresponding Node Bs are called the radio network subsystem (RNS).

An intra-domain connection of RAN nodes to multiple CN nodes overcomes the strict hierarchy which restricts the connection of a RAN node to just one CN node. This restriction results from routing mechanisms in the RAN nodes that differentiate only between information to be sent to packet switched (PS) or to circuit switched (CS) domain CN nodes. Furthermore, the routing mechanisms in the RAN nodes do not differentiate between multiple CN nodes in each domain. The intra-domain connection of RAN nodes to multiple CN nodes introduces a routing mechanism, enabling the RAN nodes to route information to different CN nodes within the CS or PS domain, respectively. The routing mechanism includes, for example, a "pool-area."

A "pool-area" as defined, for example, in the 3rd Generation Partnership Project (3GPP) Release 8, Technical Specification 23.236 "Intra-domain connection of Radio Access Network (RAN) nodes to multiple core network (CN) nodes" (TS 23.236), is an area within which a UE or MS (UE/MS) may roam without a need to change the CN node serving the UE/MS. A pool-area is served by one or more CN nodes in parallel. All cells controlled by the RAN nodes belong to the same one (or more) pool-area. When one of the CN nodes is unavailable, for example, to maintenance the CN node, failure of the CN node, or to reduce the load of UE/MS on the CN node, the routing mechanism allows each UE/MS to be served by other CN nodes in the pool-area.

The routing mechanism of the intra-domain connection of RAN nodes to multiple CN nodes also provides a load re-distribution for moving subscribers of a CN node to a different CN node or nodes in the pool-area when, for example, the CN node is taken down for maintenance, fails, or to reduce the load of UE/MS on the CN node. "Load re-distribution" is a mechanism for removing a load from one CN node to another CN node or nodes in a pool-area in an orderly manner with minimal impact to end users and/or additional loads on other entities.

### BRIEF DESCRIPTION OF THE DRAWINGS:

For proper understanding of the invention, reference should be made to the accompanying drawings, wherein:
Fig. 1 illustrates an example of a pool-area configuration.
Fig. 2 illustrates an example of load re-distribution.
Fig. 3 illustrates a method for load re-distribution in accordance with an embodiment of the invention.
Fig. 4 illustrates a system in accordance with an embodiment of the invention.
Fig. 5 illustrates another method for load re-distribution in accordance with an embodiment of the invention.
Fig. 6 illustrates an apparatus for load re-distribution in accordance with an embodiment of the invention.

### DETAILED DESCRIPTION:

It will be readily understood that the components of the invention, as generally described and illustrated in the figures herein, may be arranged and designed in a wide variety of different configurations. Thus, the followed detailed description of the embodiments of methods, an apparatus, a system, and computer programs, as represented in the attached figures, is not intended to limit the scope of the invention as claimed, but is merely representative of selected embodiments of the invention.

As described above, an intra-domain connection of RAN nodes to multiple CN nodes, for example, in 3GPP TS 23.236, provides RAN nodes that include a routing mechanism that enables the RAN nodes to route information to different CN nodes within the CS or PS domain, respectively. As CN node capacities increase with the addition and movement of UE/MS subscribers to the CN node, a demand for CN node resiliency for protecting services rendered to end users of a UTRAN-based system also increases.

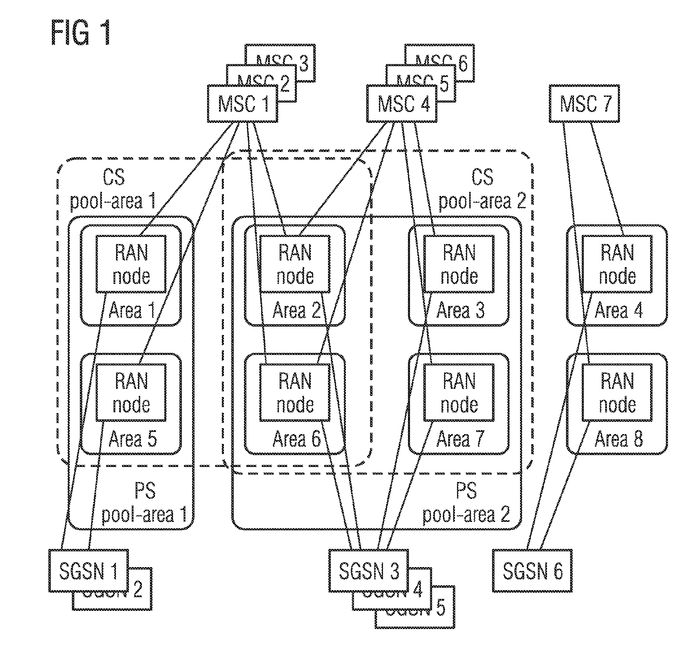

In order to meet this increased demand for CN node resiliency, the intra-domain connection of the RAN nodes to multiple CN nodes also provides the routing mechanism with pool-areas. A pool-area is comparable to a mobile switching center (MSC) or a serving GRPS support node (SGSN) service area as a collection of one or more RAN node service areas. The pool-area can be served by multiple CN nodes in parallel which share traffic of this area between one another. Hence, a pool-area can include all the location area (LA) and routing area (RA) information of one or more of the RAN nodes that are served by a certain group of CN nodes in parallel. Fig. 1 illustrates an example of a pool-area configuration. Fig. 1 shows most of the possible pool-area configurations. For example, the pool-area configuration includes CS pool-area 1 (RAN node areas 1, 2, 5, and 6 served by MSCs 1, 2, and 3), and CS pool-area 2 (RAN node areas 2, 3, 6, and 7 served by MSCs 3, 4, and 5). The pool-area configuration also includes PS pool-area 1 (RAN node areas 1 and 5 served by SGSNs 1 and 2) and PS pool-area 2 (RAN node areas 2, 3, 6, and 7 served by SGSNs 3, 4, and 5). Additionally, the pool-configuration includes RAN node areas 4 and 8 served by MSC 7 and SGSN 6 without any use of the intra-domain connection of RAN nodes to multiple CN nodes. CS pool-areas 1 and 2 are overlapping pool-areas, while PS pool-areas 1 and 2 are nonoverlapping pool-areas. The pool-areas of the CS and the PS domain can be configured identical as CS pool-area 2 and PS pool-area 2, or they can be configured differently as shown for CS pool-area 1 and PS pool-area 2. The number or capacity of each CN node can be configured independently for each pool-area. The use of the intra-domain connection of RAN nodes to multiple CN nodes can be configured in parts of the network only. The intra-domain connection can co-exist with other areas not using this feature as illustrated in Fig. 1 with RAN node areas 4 and 8 which are served by MSC 7 and SGSN 6.

In this configuration, a CN node is selected to serve a UE/MS subscriber when the UE/MS enters the pool-area where the CN node is located. The UE/MS can roam in the pool-area without a need to change the serving CN node. Each CN node has a network resource identifier (NRI) that uniquely identifies the CN node from other CN nodes in the pool-area. The NRI allows a RAN node to route all transactions to and from a UE/MS to the CN node serving that subscriber. The NRI is allocated to the CN node during the CN node's initial access to the pool-area. The length of the NRI is the same length in all nodes of a domain in one pool-area. More than one NRI may be assigned to a CN node if the CN node is associated with more than one-pool area or domain. The NRI is part of a temporary mobile station identity (TMSI) in the CS domain or a P-TMSI in the PS domain, which is assigned by the serving CN node to the UE/MS.

Situations arise when the load of a serving CN node must be removed, for example, to perform scheduled maintenance or to perform load re-distribution to avoid overload, without impacting the end users/subscribers and/or additional load on other entities. During load re-distribution, a null-NRI is allocated by the serving CN node to indicate to a RAN node that a new CN node selection is required. Load re-distribution includes removing the load of UE/MS subscribers from the serving CN node and moving them to a new CN node or nodes while the serving CN node is being serviced. A "null-NRI" as defined, for example, in 3GPP TS 23.236, is an indication to a RAN node that a non access stratum (NAS) selection function shall be used for selecting a new CN node to receive a message. There is one unique "null-NRI" in a public land mobile network (PLMN) supporting pool functionality.

Existing load re-distribution mechanisms fails to timely and completely unload, e.g., "empty," a serving CN node of UE/MS subscribers because load re-distribution is limited by periodic location update (LU)/periodic routing area update (RAU) timer usage for idle UE/MS and further limited by the need to wait for active UE/MS to initiate a operation and maintenance (O&M) transaction.

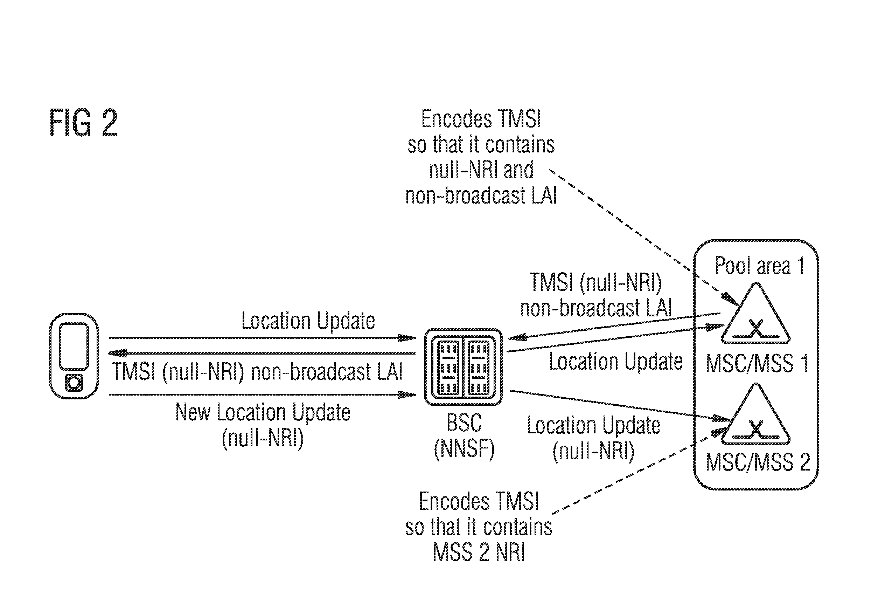

Fig. 2 illustrates an example of load re-distribution. For example, Fig. 2 illustrates load re-distribution for both idle mode UE/MS and active mode UE/MS. Load re-distribution of idle mode UE/MS begins when a CN node, for example, a mobile switching station (MSS), receives a LU or attach request from a RAN node. The serving MSS returns a new TMSI with a null-NRI, and a non-broadcast location area identity (LAI) in the LU accept message. The non-broadcast LAI causes the MS/UE to immediately send a new LU, which the RAN node (BSC or RNC) can then route to a new MSS based on the null-NRI. The non-broadcast LAI is not broadcasted at the radio interface, and thus the UE/MS, when comparing the LAI stored on a universal subscriber identity module ((U)SIM) of the UE/MS with the actual LAI broadcast in the cell, initiates a new LU. Because the LAIs are different, the UE/MS considers that the LAI has been changed and a new LU is required. When the serving MSS is off-loaded using load re-distribution, a null-NRI is allocated in all LU or attach requests.

Load re-distribution of active mode UE/MS begins after load re-distribution of idle mode UE/MS has been completed. The CN node scans through active UE/MS and moves the active UE/MS to the new MSS in the pool-area. Null-NRI and non-broadcast LAI are provided to these UE/MS subscribers using the TMSI re-allocation procedure so that a LU is triggered when the ongoing active UE/MS O&M transaction ends, causing the active UE/MS to then be moved to the new MSS.

The same phases for CS core load re-distribution previously described are also provided for PS core load re-distribution, according to, for example, 3GPP TS 23.236, however between the two previously described phases, a PS core-specific phase can be implemented, whereby a SGSN requests all UE/MS trying to set up parallel distributed processing (PDP) contexts to detach and reattach. When the UE/MS reattach, the SGSN moves the UE/MS as prescribed in the first phase (idle mode) described above.

Current load re-distribution mechanisms require significant time to re-distribute UE/MS subscribers to other CN nodes in the pool-area because the functionality is limited by periodic LU/periodic RAU timer usage for idle UE/MS and further limited by the need to wait for active UE/MS to initiate a operation and maintenance (O&M) transaction, after re-distribution of the idle mode UE/MS subscribers is completed. For example, a periodic LU timer, under current load re-distribution mechanisms, can typically be 4-6 hours. This timing can be reduced, but cannot be reduced too low in order to prevent large numbers of UE/MS subscribers from being re-distributed too quickly. Periodic LU is controlled in the RAN node and is also an O&M transaction-consuming task. This load re-distribution mechanism may not completely unload or "empty" the CN node within a reasonable amount of time, if, for example, the CN node needs to be taken out of service. For example, when idle mode UE/MS subscribers are re-distributed, active mode UE/MS may be waiting for re-distribution. When these active mode UE/MS are finally re-distributed (after completion of the idle mode UE/MS re-distribution), some of these active mode UE/MS may be in idle mode and unreachable. Therefore, all UE/MS, whether idle or active, may not be completely unloaded from the CN node, preventing the CN node from being taken "off-line" for servicing. Accordingly, a problem exists in controlling the exact amount of re-distributed UE/MS subscribers with periodic LU or RAU timer modifications, resulting in excessive and unpredictable signaling and capacity problems within the radio network.

In order to timely and completely unload or "empty" a CN node, according to embodiments of the invention, methods, an apparatus, a system, and computer programs are provided for load re-distribution of subscribers for a serving CN node in a pool-area. Each UE/MS, whether active or inactive, is paged to initiate re-distribution of the UE/MS to a new CN node in the pool-area. By paging the UE/MS, the CN node can perform (P-)TMSI re-allocation with a non-broadcast LAI and null-NRI.

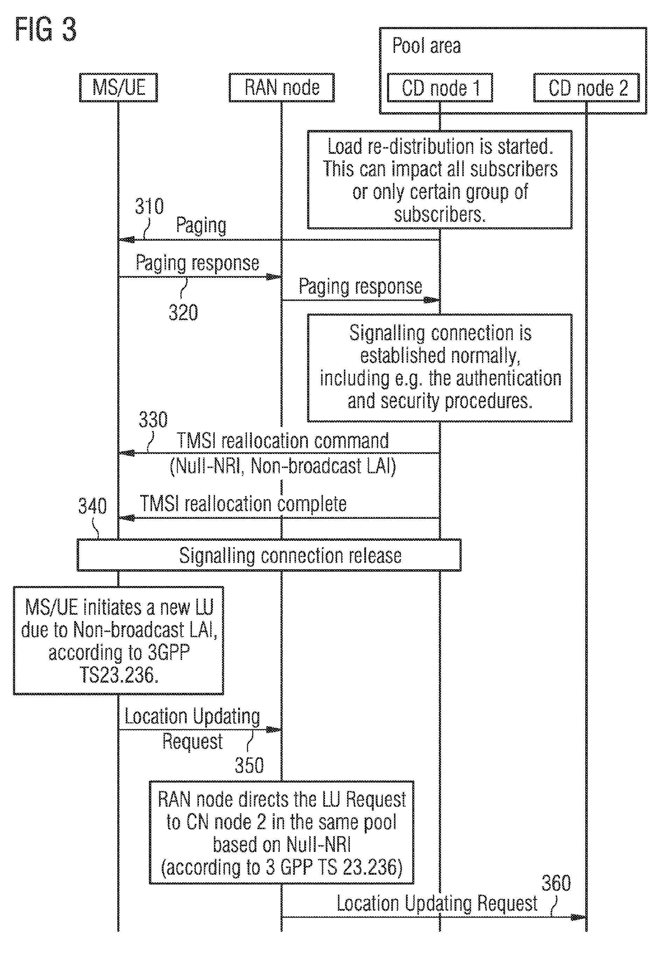

Fig. 3 illustrates a method in accordance with an embodiment of the invention. In particular, Fig. 3 illustrates a method for the load re-distribution of a UE/MS from a serving CN node (CN node 1) to a new CN node (CN node 2). The method can include transmitting a page, by the CN node 1, through the RAN node to a UE/MS for initiating a re-distribution of the UE/MS to CN node 2 (step 310). The UE/MS can include idle mode and active mode UE/MS. The step of transmitting the page by the CN node 1 can be performed in accordance with existing functionality, as defined, for example, in 3GPP TS 25.413 ("UTRAN Iu interface radio access network application part (RANAP) signaling"), TS 48.008 ("Mobile switching centre - base station system (MSC-BSS) interface, layer 3 specification"), and TS 48.018 ("General packet radio service (GPRS), base station system (BSS) - serving GPRS support node (SGSN), BSS GPRS protocol (BSSGP)"). In step 320, the UE/MS can respond to the CN node 1 page, through the RAN node, establishing a signal connection to the CN node 1.

Authentication and security procedures can also be performed upon establishing the signaling connection between the UE/MS and the CN node 1. In step 330, in response to receiving the paging response from the UE/MS, the CN node 1 can transmit a (P-)TMSI reallocation command to the UE/MS. The (P-)TMSI reallocation command can include a null-NRI and a non-broadcast LAI. At this point, the signaling connection between the UE/MS and the CN node 1 can be released (step 340).

In step 350, in response to receiving the non-broadcast LAI, the UE/MS immediately can initiate and send a new LU to the RAN node. The non-broadcast LAI, transmitted by the CN node 1 is not broadcasted at the radio interface, and thus the UE/MS, when comparing the LAI stored in the U(SIM) with the actual LAI broadcast in the cell, causes the UE/MS to initiate a new LU. Because the LAIs are different, the UE/MS considers that the LAI has been changed and a new LU is required. In step 360, the RAN node can then route the new LU sent by the UE/MS to CN node 2, based on the null-NRI. The CN node 1 and the CN node 2 are in the same pool-area. The step of paging can include paging a group of UE/MS, instead of a single UE/MS, for example, based on international mobile subscriber identities (IMSI) or on an areas, e.g., RAN node area or location area, to limit the number of impacted subscribers and minimize the excessive signaling load on the elements of the radio network, e.g., the inter visiting location register (VLR) and towards the home location register (HLR). As result, all UE/MS, whether active or inactive, can be reached and re-distributed in a timely manner. Similar methods can be used for PS pool-areas. Potential uses for long term evolution (3GPP 4G technology) is also considered.

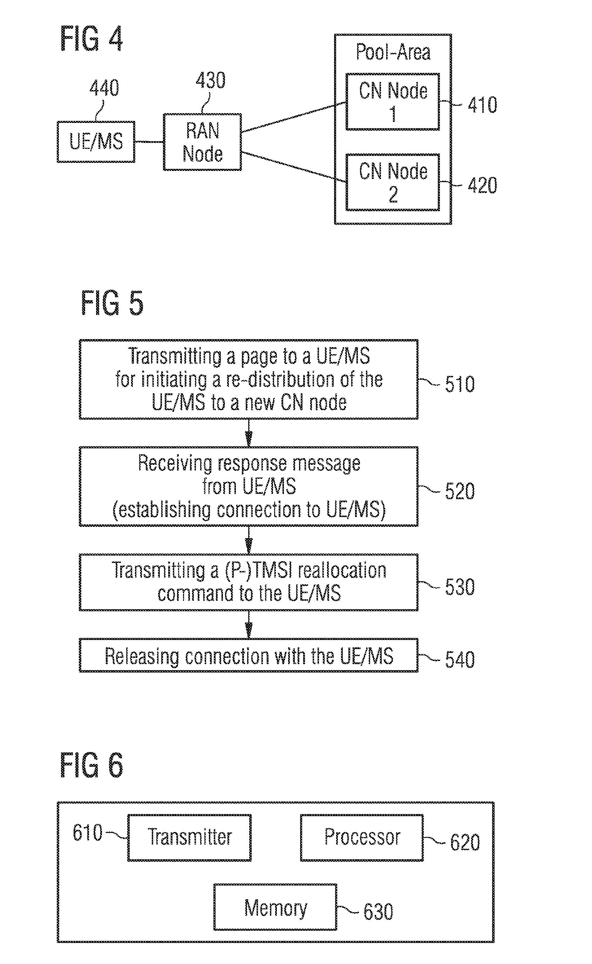

Fig. 4 illustrates a system in accordance with an embodiment of the invention. The system includes a serving CN node 410 (CN node 1), a new CN node 420 (CN node 2), a RAN node 430, and a UE/MS 440. Each of serving CN node 410, the new CN node 420, the RAN node 430, and the MS/UE 440 can include a processor and memory. The serving CN node 410 can be configured to transmit a page through the RAN node 430 to the UE/MS 440 for initiating a re-distribution of the UE/MS 440 to the new CN node 420. The UE/MS 440 can be an idle mode or an active mode UE/MS. The serving CN node 410 can be further configured to transmit the page to the UE/MS 440 in accordance with existing functionality, as defined, for example, in 3GPP TS 25.413, TS 48.008, and TS 48.018. The UE/MS 440 can be configured to transmit a response message, in response to the page, through the RAN node 430, to the serving CN node 410, in order to establish a signal connection to the serving CN node 410.

The serving CN node 410 can also be configured to perform authentication and security procedures upon establishing the signaling connection between the UE/MS and the CN node 1.

The serving CN node 410 can also be configured, in response to receiving the response message from the UE/MS 440, to transmit a (P-)TMSI reallocation command to the UE/MS 440. The (P-)TMSI reallocation command can include a null-NRI and a non-broadcast LAI. Upon transmitting the (P-)TMSI reallocation command, the serving CN node 410 is further configured to release the signaling connection to the UE/MS 440.

In response to receiving the non-broadcast LAI, the UE/MS 440 is configured to initiate and send a new LU to the RAN node 430. The non-broadcast LAI, transmitted by serving CN node 410 is not broadcast at the radio interface, and thus the UE/MS 440, when comparing the LAI stored in the U(SIM) with the actual LAI broadcast in the cell, causes the UE/MS 440 to initiate a new LU. Because the LAIs are different, the UE/MS 440 considers that the LAI has been changed and a new LU is required. The RAN node 430 is configured to route the new LU sent by the UE/MS 440 to the new CN node 420, based on the null-NRI. The serving CN node 410 and the new CN node 420 are in the same pool-area.

The serving node 410 can be configured to transmit a page to a group of UE/MS, instead of a single UE/MS, for example, based on IMSI or on an areas, e.g., RAN node area or location area, to limit the number of impacted subscribers and minimize the excessive signaling load on the elements of the radio network, e.g., the inter VLR and towards the HLR. As result, all UE/MS, whether active or inactive, can be reached and re-distributed in a timely manner. Similar methods can be used for PS pool-areas. Potential uses for long term evolution (3GPP 4G technology) is also considered.

Fig. 5 illustrates a method in accordance with an embodiment of the invention. In particular, Fig. 5 illustrates a method for a serving CN node performing a load re-distribution of the UE/MS subscribers connected thereto to a new CN node.

The method can include transmitting a page by the serving CN node, for example, through a RAN node, to a UE/MS for initiating a re-distribution of the UE/MS to a new CN node (step 510). The step of transmitting can include transmitting the page to one of an idle mode and an active mode UE/MS. The step of transmitting the page can be performed in accordance with existing functionality, as defined, for example, in 3GPP TS 25.413, TS 48.008, and TS 48.018.

In step 520, the serving CN node can receive a response message from the UE/MS in response to the transmitted page, whereby the response message indicates that the UE/MS has established a signal connection to the serving CN node. Upon establishing the signaling connection between the UE/MS and the serving CN node, the serving CN node can perform authentication and security procedures with the connected UE/MS. In step 530, the serving CN node can transmit a (P-)TMSI reallocation command to the UE/MS. The (P-)TMSI reallocation command can include a null-NRI and a non-broadcast LAI. At this point, the serving CN node can release the signaling connection to the UE/MS (step 540).

The non-broadcast LAI, transmitted by the serving CN node is not broadcasted at the radio interface, and thus the UE/MS, when comparing the LAI stored in the U(SIM) with the actual LAI broadcast in the cell, causes the UE/MS to initiate a new LU. Because the LAIs are different, the UE/MS considers that the LAI has been changed and a new LU is required. As a result, the RAN node can then route the new LU sent by the UE/MS to a new CN node, based on the null-NRI in the (P-)TMSI reallocation command transmitted by the serving CN node. The serving CN node and the new CN node are in the same pool-area.

The step of transmitting the page can include transmitting a page to a group of UE/MS, instead of a single UE/MS, for example, based on IMSI or on an areas, e.g., RAN node area or location area, to limit the number of impacted subscribers and minimize the excessive signaling load on the elements of the radio network, e.g., the inter VLR and towards the HLR. As result, all UE/MS, whether active or inactive, can be reached and re-distributed in a timely manner. Similar methods can be used for PS pool-areas. Potential uses for long term evolution (3GPP 4G technology) is also considered. Fig. 6 illustrates an apparatus in accordance with an embodiment of the invention. The apparatus 600, for example, a serving CN node, includes a transmitter 610, a processor 620, and memory 630. The transmitter 610 can be configured to transmit a page, for example, through a RAN node, to a UE/MS for initiating a re-distribution of the UE/MS to a new CN node. The UE/MS can be an idle mode or an active mode UE/MS. The transmitter can be further configured to transmit the page to the UE/MS in accordance with existing functionality, as defined, for example, in 3GPP TS 25.413, TS 48.008, and TS 48.018.

The processor 620 can be configured to receive a response message from the UE/MS in response to the transmitted page, whereby the response message indicates that the UE/MS has established a signal connection to the apparatus. Upon establishing the signaling connection between the UE/MS and the apparatus, the processor 620 can also be configured to perform authentication and security procedures with the connected UE/MS.

The transmitter 610 can be further configured to transmit a (P-) TMSI reallocation command to the UE/MS. The (P-)TMSI reallocation command can include a null-NRI and a non-broadcast LAI. At this point, the processor 620 can be configured to release the signaling connection to the UE/MS. The non-broadcast LAI, transmitted by the transmitter 610, is not broadcasted at the radio interface, and thus the UE/MS, when comparing the LAI stored in the U(SIM) with the actual LAI broadcast in the cell, causes the UE/MS to initiate a new LU. Because the LAIs are different, the UE/MS considers that the LAI has been changed and a new LU is required. As a result, the RAN node can then route the new LU sent by the UE/MS to a new CN node, based on the null-NRI in the (P-)TMSI reallocation command transmitted by the transmitter 610. The apparatus and the new CN node are in the same pool-area.

The transmitter 610 can be further configured to transmit a page to a group of UE/MS, instead of a single UE/MS, for example, based on IMSI or on an areas, e.g., RAN node area or location area, to limit the number of impacted subscribers and minimize the excessive signaling load on the elements of the radio network, e.g., the inter VLR and towards the HLR. As result, all UE/MS, whether active or inactive, can be reached and re-distributed in a timely manner. Similar methods can be used for PS pool-areas. Potential uses for long term evolution (3GPP 4G technology) is also considered. The memory 630 can be configured to store a NRI that uniquely identifies the apparatus from other CN nodes in the pool-area. The NRI allows a RAN node to route all transactions to and from a UE/MS to the apparatus serving that subscriber. The NRI is allocated to the apparatus during the apparatus's initial access to the pool-area. The length of the NRI is the same length in all nodes of a domain in one pool-area. More than one NRI may be assigned to an apparatus if the apparatus is associated with more than one-pool area or domain. The NRI is part of a TMSI in the CS domain or a (P-)TMSI in the PS domain, which can be assigned by the apparatus to the UE/MS.

Embodiments of the invention also provide for an apparatus. The apparatus includes means for transmitting a page to a UE/MS for initiating a re-distribution of the UE/MS to a new CN node. The means for transmitting can include means for transmitting the page for the UE/MS to be re-distributed to one of an idle mode UE/MS. The means for transmitting can be performed in accordance with existing functionality, as defined, for example, in 3GPP TS 25.413, TS 48.008, and TS 48.018.

The apparatus can further include means for receiving a response message from the UE/MS in response to the transmitted page, whereby the response message indicates that the UE/MS has established a signal connection to the serving CN node. Upon establishing the signaling connection between the UE/MS and the apparatus, the apparatus can include means for performing authentication and security procedures with the connected UE/MS. The apparatus can further include means for transmitting a (P-)TMSI reallocation command to the UE/MS. The (P-)TMSI reallocation command can include a null-NRI and a non-broadcast LAI. Further, the apparatus can include means for releasing the signaling connection to the UE/MS, whereby the UE/MS is triggered to initiate and transmit a new LU based on the null-NRI in the (P-)TMSI reallocation command transmitted by the apparatus.

Accordingly, an embodiment of the invention includes a method. The method can include transmitting a page, by a serving CN node, to a UE/MS for initiating a load re-distribution of the UE/MS to a new CN node. The method further can include transmitting a response message, by the UE/MS, in response to receiving the transmitted page for establishing a signal connection to the serving CN node. The method can further include transmitting an identity, by the serving CN node, in response to receiving the response message from the UE/MS. The transmitted identity can include a network resource identifier and a location area identity. Further, the method can include initiating a new location update, by the UE/MS, in response to the transmitted location area identity. The method can also include transmitting the new location update from the UE/MS to the new CN node for re-distributing the UE/MS to the new CN node.

Another embodiment of the invention includes a system. The system can include a serving CN node, a new CN node, a RAN node, and a UE/MS. The serving CN node can be configured to transmit a page through the RAN node to the UE/MS for initiating a re-distribution of the UE/MS to the new CN node. The UE/MS can be configured to transmit a response message, in response to the page, through the RAN node, to the serving CN node, in order to establish a signal connection to the serving CN node. The serving CN node can be further configured to transmit an identity, in response to receiving the response message from the UE/MS. The transmitted identity can include a network resource identifier and a location area identity. Further, the UE/MS can be configured to initiate a new location update, in response to the transmitted location area identity, and configured to transmit the new location update to the new CN node for re-distributing the UE/MS to the new CN node.

In another embodiment of the invention a method is provided. The method can include transmitting a page, by a serving CN node, to a UE/MS for initiating a re-distribution of the UE/MS to a new CN node. The method can further include receiving a response message from the UE/MS in response to the transmitted page, whereby the response message indicates that the UE/MS has established a signal connection to the serving CN node. Further, the method can include performing authentication and security procedures with the connected UE/MS. The method can also include transmitting an identity, in response to receiving the response message from the UE/MS. The transmitted identity can include a network resource identifier and a location area identity. The transmitting the identity can include triggering the UE/MS, in response to the transmitted identity, to initiate and transmit a new location update to the new CN node for re-distributing the UE/MS to the new CN node.

An embodiment of the invention includes an apparatus. The apparatus can include a transmitter, a processor, and memory. The transmitter can be configured to transmit a page to a UE/MS for initiating a re-distribution of the UE/MS to a new CN node. The processor can be configured to receive a response message from the UE/MS, in response to the transmitted page, whereby the response message indicates that the UE/MS has established a signal connection to the apparatus. Upon establishing the signaling connection between the UE/MS and the apparatus, the processor can also be configured to perform authentication and security procedures with the connected UE/MS. The transmitter can be further configured to transmit an identity, in response to receiving the response message from the UE/MS. The transmitted identity can include a network resource identifier and a location area identity. The transmitted identity can trigger the UE/MS to initiate and transmit a new location update to the new CN node for re-distributing the UE/MS to the new CN node. The memory can be configured to store the identity.

In another embodiment of the invention, a computer program embodied on a computer readable medium is provided. The computer program can be configured to control a processor to perform operations. The operations can include transmitting a page to a UE/MS for initiating a load re-distribution of the UE/MS to a new CN node. The operations further can include transmitting a response message in response to receiving the transmitted page for establishing a signal connection to the serving CN node. The operations can further include transmitting an identity in response to receiving the response message from the UE/MS. The transmitted identity can include a network resource identifier and a location area identity. Further, the operations can include initiating a new location update in response to the transmitted location area identity. The operations can also include transmitting the new location update from the UE/MS to the new CN node for re-distributing the UE/MS to the new CN node.

In another embodiment of the invention, a computer program embodied on a computer readable medium is provided. The computer program can be configured to control a processor to perform operations. The operations can include transmitting a page to a UE/MS for initiating a re-distribution of the UE/MS to a new CN node. The operations can further include receiving a response message from the UE/MS in response to the transmitted page, whereby the response message indicates that the UE/MS has established a signal connection to the serving CN node. Further, the operations can include performing authentication and security procedures with the connected UE/MS. The operations can also include transmitting an identity, in response to receiving the response message from the UE/MS. The transmitted identity can include a network resource identifier and a location area identity. The transmitting the identity can include triggering the UE/MS, in response to the transmitted identity, to initiate and transmit a new location update to the new CN node for re-distributing the UE/MS to the new CN node.

The steps of a method or algorithm described in connection with the embodiments disclosed herein can be embodied directly in hardware, in a computer program executed by a processor, or in a combination of the two. A computer program can be embodied on a computer readable medium, such as a storage medium. For example, a computer program can reside in random access memory (RAM), flash memory, read-only memory (ROM), erasable programmable read-only memory (EPROM), electrically erasable programmable read-only memory (EEPROM), registers, hard disk, a removable disk, a compact disk read-only memory (CD-ROM), or any other form of storage medium known in the art. The storage medium can be coupled to the processor such that the processor can read information from, and write information to, the storage medium. In the alternative, the storage medium can be integral to the processor. The processor and the storage medium can reside in an application specific integrated circuit (ASIC). In the alternative, the processor and the storage medium can reside as discrete components.

The features, structures, or characteristics of the invention described throughout this specification may be combined in any suitable manner in one or more embodiments. One skilled in the relevant art will recognize that the invention can be practiced without one or more of the specific features or advantages of a particular embodiment. In other instances, additional features and advantages may be recognized in certain embodiments that may not be present in all embodiments of the invention.

One having ordinary skill in the art will readily understand that the invention as discussed above may be practiced with steps in a different order, and/or with hardware elements in configurations which are different than those which are disclosed. The embodiments described above may be practiced or applied independently or may be combined in any appropriate manner. Therefore, although the invention has been described based upon these preferred embodiments, it would be apparent to those of skill in the art that certain modifications, variations, and alternative constructions would be apparent, while remaining within the spirit and scope of the invention.

## Claims

1. A method comprising:
transmitting (510) a page, by a serving core network node (410), to a mobile station (440) for initiating a re-distribution of said mobile station (440) to a new core network node (420),
receiving (520) a response message from said mobile station (440) in response to said transmitted page, whereby said response message indicates that said mobile station (440) has established a signaling connection to said serving core network node (410), and
transmitting (530) an identity to said mobile station (440), in response to receiving (520) said response message.

2. The method of claim 1, further comprising:
performing authentication and security procedures with said connected mobile station (440) before transmitting (530) said identity.

3. The method of claim 1 or 2, wherein said transmitted identity comprises at least one of a network resource identifier and a location area identity.

4. The method of any of claims 1 to 3, wherein said step of transmitting (530) an identity further comprises triggering said mobile station (440), in response to said transmitted identity, to initiate and transmit a new location update to said new core network node (420) for re-distributing said mobile station (440) to said new core network node (420).

5. The method of any of claims 1 to 4, wherein said step of transmitting (510) a page comprises paging a group of mobile stations (440).

6. The method of claim 5, wherein said group of mobile stations (440) is based on international mobile subscriber identities.

7. The method of claim 5, wherein said group of mobile stations (440) is based on a radio access network node area or a location area.

8. The method of any of claims 1 to 7, further comprising:
releasing (540) said signaling connection to said mobile station (440) upon transmitting (530) said identity to said mobile station (440).

9. An apparatus (410) comprising:
a transmitter (610) configured to transmit a page to a mobile station (440) for initiating a re-distribution of said mobile station (440) to a new core network node (420),
a processor (620) configured to receive a response message from said mobile station (440), in response to said transmitted page, whereby said response message indicates that said mobile station (440) has established a signaling connection to said apparatus (410), and
a memory (630) configured to store an identity,
wherein said transmitter (610) is further configured to transmit said identity to said mobile station (440), in response to receiving said response message.

10. The apparatus (410) of claim 9, wherein said processor (620) is further configured to perform authentication and security procedures with said connected mobile station (440).

11. The apparatus (410) of claim 9 or 10, wherein said transmitted identity comprises at least one of a network resource identifier and a location area identity.

12. The apparatus (410) of any of claims 9 to 11, wherein said transmitted identity triggers said mobile station (440) to initiate and transmit a new location update to said new core network node (420) for re-distributing said mobile station (440) to said new core network node (420).

13. A method comprising:
receiving a page, from a serving core network node (410), for initiating a load re-distribution of a mobile station (440) to a new core network node (420),
transmitting a response message to said serving core network node (410), in response to receiving said page, for establishing a signaling connection to said serving core network node (410),
receiving an identity, from said serving core network node (410),
initiating a new location update, in response to said received identity.

14. The method of claim 13, further comprising
transmitting said new location update to said new core network node (420) for re-distributing said mobile station (440) to said new core network node (420).

15. The method of claim 13 or 14, wherein said received identity comprises at least one of a network resource identifier and a location area identity.

16. A computer program product embodied on a computer readable medium configured to control a processor to perform the method of:
transmitting a page, by a serving core network node (410), to a mobile station (440) for initiating a re-distribution of said mobile station (440) to a new core network node (420),
receiving a response message from said mobile station (440) in response to said transmitted page, whereby said response message indicates that said mobile station (440) has established a signaling connection to said serving core network node (410), and
transmitting an identity to said mobile station (440), in response to receiving said response message.

17. A computer program product embodied on a computer readable medium configured to control a processor to perform the method of:
receiving a page, from a serving core network node (410), for initiating a load re-distribution of a mobile station (440) to a new core network node (420),
transmitting a response message to said serving core network node (410), in response to receiving said page, for establishing a signaling connection to said serving core network node (410),
receiving an identity, from said serving core network node (410),
initiating a new location update, in response to said received identity.
